# EUROPEAN PATENT SPECIFICATION

(11) **EP 1 719 328 B1**
(45) Date of publication and mention of the grant of the patent: **21.07.2010**
(21) Application number: 05708566.4
(22) Date of filing: 22.02.2005
(51) Int. Cl.: H04L 29/06, H04M 1/2745

(54) **AUTOMATED DATA MIGRATION**
AUTOMATISIERTE DATENMIGRATION
MIGRATION AUTOMATISEE DE DONNEES

(30) Priority: 23.02.2004 US 785423
(43) Date of publication of application: 08.11.2006
(73) Proprietor: Nokia Corporation, 02150 Espoo (FI)
(72) Inventor: FLECK, Holger, 65812 Bad Soden/Ts. (DE); HORNUNG, Bernhard, 74523 Schwäbisch-Hall (DE); RAMPP, Hans-Peter, 74177 Bad-Friedrichshall (DE); HERZOG, Wolfram, 74229 Oedheim (DE)
(74) Representative: Cohausz & Florack
(86) International application number: PCT/IB2005/000439
(87) International publication number: WO 2005/083973

(56) References cited:
- EP-A- 1 359 777
- WO-A-01/44911
- US-A1- 2002 023 024

## Description

### Field of the Invention

The invention relates to a method for transferring data from a source communication device, in particular a cellular mobile phone, to a destination communication device, in particular a cellular mobile phone. The invention also relates to a system for transferring data from a source communication device to a destination communication device, comprising a destination communication device, and a source communication device. The invention further relates to communication devices of such systems as well as a computer program for transferring data from a source communication device to a destination communication device.

### Background of the Invention

It is commonly known to migrate data, such as contact data, messages like SMS or MMS, calendar entries, bookmarks, Internet Access point settings, system settings, applications, application extensions, libraries, add-ons, plug-ins and the like from one mobile phone to another. For transferring the data a translator software is required, which translates data from a source communication device into a format readable by the destination communication device. The translator software, which performs the actual conversion of the data format that is used by the source communication device to the data format that is used by the destination communication device, is generally operated by a device that has to be looped-in between the source communication device and the destination communication device. This device may for instance be a personal computer (PC), to which both the source communication device and the destination communication device are connected either concurrently or one after another.

It is also possible that the source communication device is a PC, which a user has used for backing up data that stems from a different device, for instance from a hand-held device. The backed-up data then is migrated from the PC to the destination communication device on the basis of the translator software, which is stored on the same PC or on a second PC.

From "Support Guide for Transferring Data from other phones to the NOKIA 9210i Communicator", Handbook for NOKIA communicator users, it is known to transfer data from an older Communicator model 9110 to a newer Communicator model 9210i.. In this particular case, it is thus possible to transfer data directly between similar devices. However, in cases where data is to be transferred between different devices, for instance devices of different manufacturers, a conversion software is required, which may for instance reside on a personal computer. For transferring the data, first of all the data is loaded into the personal computer, wherein it is converted into the correct format by the conversion software. The converted data then is transferred to the new device.

From "Support Guide for Copying Contacts, Calendar and Message Data between NOKIA communicator 9200 Series Devices" handbook for NOKIA Communicator users, it is known to transfer data from a communicator device to other devices. According to this handbook, it is proposed to copy data, which is to be transferred, onto a memory card, remove the memory card from the source communication device, insert the memory card into the destination communication device and read the data within the destination communication device. This method is on the one hand not practical and on the other hand only feasible in cases when data is transferred between similar devices, which in addition both have to provide a memory card interface for storing to and reading from memory cards. Transferring data between devices with different operating systems or even from different series is not possible at all.

Transferring data between different devices always requires data converter software. The handling of such a data converter, also known as translator or migrator, is complicated and not very reasonable for users who want to transfer data from one device to another. First of all, translation software has to be installed. Then, the translation software has to be compatible with the devices between which the data is to be exchanged. In case an error occurs, the migration process will abort and incorrect or incomplete data transfer is the result.

To provide compatibility between various devices, the translator software needs to know the source communication device data structure as well as the destination communication device data structure. It also needs to convert the data into different formats. The translator software needs fully implemented program code for the Application Programming Interfaces (API) of the source and the destination communication device.

A user is required to install the translator software manually. Furthermore, the user has to select which data is to be migrated, which device is the source communication device and which device is the destination communication device. Furthermore, it may be required that the user identifies the type of the source and destination communication device, e.g. manufacturer and series of the device. After that the data is loaded onto a computer, translated and transferred into a new data format and then further transferred to the destination communication device. This may be experienced as time consuming and may also be error prone.

From document EP 1 359 777 A1 an information communication system is known comprising a cellular phone having a data storage, a data list transmitter, and a data transmitter; and a cellular phone having a check list DB and a data receiver. The cellular phone makes the data list transmitter transmit a data list of content data stored in the data storage, to the cellular phone. The cellular phone collates the data list with a check list stored in the check list DB to generate a request list, and transmits the request list to the cellular phone. The cellular phone extract the content data recorded in the received request list from the data storage and transmits the content data to the cellular phone. The cellular phone receives the content data through the data receiver.

From US 2002/023024 A1 a method for automatically generating a custom name list for use in an order form which can be submitted to an Internet shopping site to complete an order is known. The method utilizes address book data of the customers that visit such shopping sites to populate an order form, or to populate a selection list, the contents of which can be electively submitted to the shopping site. In one method, names and addresses are read from an address book database and incorporated into a form which enables the user to easily select recipients for one or more gifts

However, according to the known prior art, the migration of data from one source communication device to a destination communication device often times lacks interoperability due to different operating systems or data structures on the different devices. Users cannot rely on a seamless data migration in case of different types of source and destination communication devices. Therefore, it is an object to provide for seamless data migration between source and destination communication devices.

### Summary of the Invention

To overcome at least some of these problems encountered when transferring data from a source communication device to a destination communication device, the invention proposes a method according to claim 1.

By providing the inventive method, data may automatically be transferred between different devices. The source and destination communication devices may for instance be hand-held devices such as cellular phones or personal digital assistants. The source communication device may for instance also be a PC onto which data from a hand-held device has been backed up. A data collector means, which is hereinafter understood as data collector program means, may be transferred from the destination communication device to the source communication device. After a data connection has been established, the data collector means, such as a small software module or an agent, e.g. a java applet or a java application, may be installed on the source communication device.

The data collector means is programmed to collect data on the source communication device. This data may be calendar entries, contacts, messages, settings and other. The data collector means allow transferring the collected data from the source communication device to the destination communication device.

The advantage of the inventive method is that the amount of user interaction required for the transfer of the data from the source communication device to the destination communication device is reduced. A further advantage is that different source communication devices are supported to be used to collect data and to transfer these onto the destination communication device. The data collector means need to be customized for the respective source communication device, so as to be able to collect and transfer the data from the source communication device. Data transfer becomes faster and easier to use. Users may easily switch between different devices and may not have to care about the way the data is transferred between the devices.

To allow migration of the collected data into said destination communication device, it is proposed that migration means within the destination communication device migrate the data into the destination communication device by translating the transferred data into a data format of the destination communication device. By translating or converting the data, or parts of it, within the destination communication device, the data collector means does not have to care about the data format of the destination communication device. This reduces programming effort for the data collection means. Translating the data within the destination communication device allows adjusting the received data to the data format of the destination communication device.

Translating or converting only parts of the received data may be particularly appropriate if data is transferred from a source communication device to an older destination communication device, wherein the destination may have less memory, or less functionality, and thus may not be capable of making use of the complete received data.

Transferring the data is done using a wired or a wireless connection. This may be an USB, or fire wire connection as well as an infrared or a Bluetooth^{®} connection. In case of an infrared connection, the user activates the infrared port on the source communication device. The migration means will communicate with the source communication device in response to the activation of the infrared port. In case of using a short range radio link, such as Bluetooth^{®}, the user typically first accepts a connection request on the source communication device before the migration means is able to communicate with the source communication device. This kind of user interaction on the source communication device has been implemented for security reasons in both cases.

It is preferred that the collected data is transferred from the source communication device to the destination communication device using a standard data format. Transferring the data via a standard data format, such as XML, allows using different migration means with different data collector means. This makes the source communication device independent of the migration means functionally residing within the destination communication device. The same migration means may use any data collector means, as well as the same data collector means may be used to support a source communication device for different types and models of destination communication devices.

It is therefore proposed that the data collector means translates the collected data into a standard data format, that the data collector means transfers the translated data to the destination communication device using the data connection, and that the transferred data is translated from the standard format into a destination communication device specific format using a migration means. The data collector means may for instance be a slender piece of software.

As some source communication devices need a particular data collector means, it is proposed that after establishing the data connection between the source communication device and the destination communication device, the source communication device is identified. Identifying the source communication device allows selecting the appropriate data collector means to be transferred to the source communication device for collecting the required data.

Identifying the source communication device is possibly performed by requesting a type identification and/or a capability object of the source communication device. The capability object may for instance contain information of the manufacturer, information of make or model and the software and firmware version of the source communication device. The destination communication device, in particular the migration means, detects the type of the source communication device to select the suitable data collector means, e.g. the suitable installation file. A module in the source communication device, such as an instance of the Object Exchange (OBEX) capability service, may serve for detecting the type of the source communication device. The migration means within the destination communications means may request the capability object from the source communication device. The information contained in the capability object may be used to select the appropriate data collector means to be installed on the source communication device.

To account for different source communication devices, it is proposed that the migration means provides at least one data collector means for a particular source communication device, and that after identifying the source communication device, a compatibility between the source communication device and the at least one provided data collector means is checked. This means that the destination communication device, in particular the migration means, may comprise a repository of different data collector means. These may provide functionality for collecting data from different source communication devices. After identifying the connected source communication device it may be checked, whether a data collector means within the destination communication device is capable of collecting data within the source communication device. In case a compatible data collector means is found within the repository, it may be transferred to the source communication device to collect the requested data.

However, it may be possible that none of the at least one provided data collector means is compatible with the current source communication device. In that case it is proposed that a compatible data collector means is loaded onto the destination communication device. To load the data collector means, it is proposed that a communication connection is established between the destination communication device and a server to download a compatible data collector means for the identified source communication device from the server onto the destination communication device. The communication connection may be established by using any present or future communication protocol. After having established the communication connection with the server, the server may provide the appropriate data collector means for collecting data on the respective source communication device. This may be any piece of software which may be transferred using a data transfer protocol. After having downloaded the data collector means onto the designation communication device, it may be transferred onto the source communication device to collect the respective, data.

To allow flexible customising of data collector means and further to allow easy transfer of the data collector means onto the source communication device, it is proposed that the data collector means is an executable file. This may be a binary file which may be transferred to and executed on the source communication device. Other executables, or equivalents, like plug-ins, java applets, etc. can also be used.

In many cases data within a source communication device is stored in particular regions of memory. It may be ciphered, hidden or otherwise protected. The data collector means enables access to the data within the source communication device. The data collector means may for instance possess information on the memory configuration and on specific portions of memory that are used for the storage of data that is to be transferred to the destination communication device. In this way, the data collector means is able to access the respective information. To access information on different types and models of communication devices, it is advantageous that the data collector means is customised or at least suited for the respective hardware and software of the different types and models of the source communication device.

To simplify the data transfer, it is proposed that the destination communication device controls the data collector means. The migration means within the destination communication device may control the data collector means. In this case, the data collector means is a simple program, which allows collecting the data on the source communication device. Further steps are controlled by the migration means.

To provide security, many communication means only allow a restricted execution of software. Only signed software applets, which come from trusted suppliers may access particular pieces of data on the communication devices. To allow collecting the requested data it is proposed that the data collector means are executed on the source communication device according to security rules within the source communication device.

To enable users to select data which they want to download onto their device from a source communication device, it is proposed that the data collector means collects available data types within the source destination communication device, that information on the available data types is transferred from the source communication device to the destination communication device, that from the available data types, data types can be selected by a user, and that only data of the selected data types is collected by the data collector means. The respective data types may be calendar data, contact data, to-do-data, message data, and device setting data, email account data, internet access point settings or any other. It may be necessary not to transfer all available data from the source communication device to the destination communication device. Therefore, it is proposed that a user may select the data types which he wants to be transferred from the source communication device to the destination communication device. After having been selected, the respective data types are collected from the source communication device. The selected data types are collected and the underlying data is transferred to the destination communication device.

To allow easy selection of the available data, it is proposed that the available data types are presented to the user for user selection via a user interface of the destination communication device. This user interface may comprise a display and input means providing the user with the possibility to view and select the desired data types.

A system is further proposed according to claim 17.

A communication device is further proposed according to claim 18.

A computer program is further proposed according to claim 19.

The invention will be hereinafter described in more detail with reference to the following Figures.

### Brief Description of the Figures

The figures show:
- Fig. 1: a prior art data converter system;
- Fig. 2: a system according to the invention; and
- Fig. 3: an inventive method.

### Detailed Description of the Invention

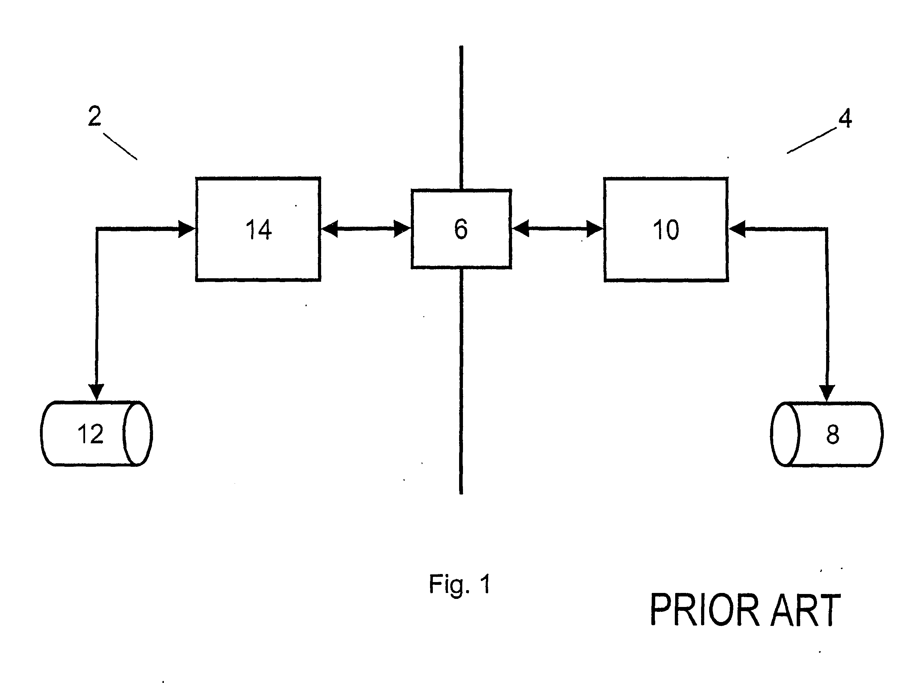

Figure 1 depicts a prior art data computer system including a destination device 2 and a source device 4, transferring data using a data converter 6. Destination device 2 comprises a user database 12 and a migration tool 14. Source device 4 comprises a user database 8 and a migration tool 10. To migrate data, such as contact data, messages, agenda data, bookmarks, to-do-lists, Internet Access point settings, system settings from source device 4 to destination device 2, a data converter 6 in between the devices 2, 4 is required. The data converter 6 usually comprises translation software, which resides on a computer. To transfer data, the respective data is read from user database 8 and is translated into a common format by the migration tool 10. The data converter 6 reads out the data from the migration tool 10. The data converter 6 converts the received data into a format readable by the migration tool 14 and provides the migration tool 14 with the translated data. After having read the data from the data converter 6 the migration tool 14 converts the data into a format appropriate for the destination device 2 and writes the converted data into the user database 12.

The data converter 6 may be a special application on the destination device 4, for instance a program or applet run by the operating system of the destination device 4, or may be running on a PC. In any case, the data converter 6 is able to read the source device 4 data and to convert it into another format. Data converter 6 needs to be an application being fully implemented for both APIs of the source device 4 and the destination device 2.

The user installs the data converter 6 manually, either on the destination device 4 or on a PC. When utilizing this data converter 6, the user selects the data to be migrated. The data converter 6 then converts the data from source device 4 into a language readable by destination device 2. After that the data is transferred from the source device 4 to the destination device 2.

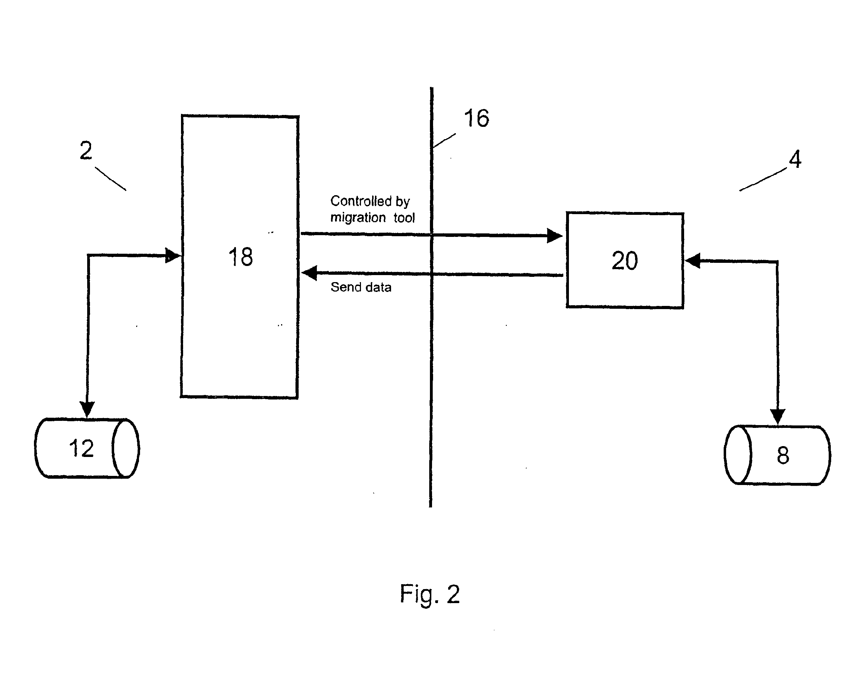

Figure 2 depicts a system according to the invention. Depicted again are a destination device 2 and a source device 4, each comprising a user database 8, 12. Data is communicated between the destination device 2 and the source device 4 via an interface 16, which may be an infrared interface or a Bluetooth^{®} interface, or any other wired or wireless interface.

Destination device 2 comprises a migration tool 18. The migration tool 18 detects the type of the source device 4 via interface 16 automatically and sends via interface 16 a data collector tool 20 onto the source device 4. When the data collector tool 20 is installed on source device 4, under control of the migration tool 18, it is started and controlled by the migration tool 18. The data collector tool 20 reads data from database 8 and provides the data in a standardised format, such as XML, via interface 16 to the migration tool 18.

The data collector tool 20 collects data of data types that are supported by the source device 2, and the migration tool 18 migrates the collected data into the destination device 2.

To allow communicating with different source devices 4, a set of data collector tools 20 for common source devices 4 are stored in a repository of the migration tool 18. The repository may be shipped together with the migration tool 18, which may permanently reside on destination device 2. To support more source devices 4 and to be able to update newer versions or other applications, the data collector tool 20 may be downloaded from a server (not depicted), if a suitable data collector tool 20 is not available on the destination device 2. In this case, the migration tool 18 may also control the download process (not depicted). The updates and extensions of the data collector tool 20 may also be made available to the destination device 4 on deliverables such as CD-ROM's and memory cards.

As the migration tool 18 controls the data collector tool 20, data collector tool 20 does not have to possess sophisticated intelligence or a user interface. The data collector tool 20 may only need to know how to access the information, like memory configuration, or used memory for the individual data types, etc., on the source device 4. Data collector tool 20 also may only need to be able to send the collected data to migration tool 18 upon request. The migration tool 18 may then process the received information and data.

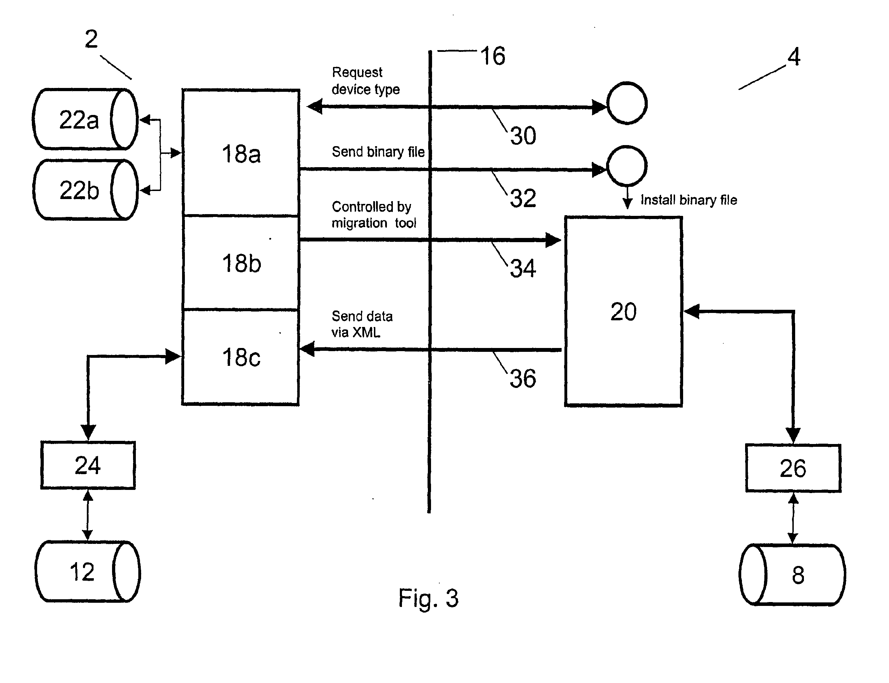

Figure 3 depicts an inventive system together with the steps to be carried out to transfer data. Depicted are the same elements as in Figure 2. Further depicted are a start module 18a of the migration tool 18, a core module 18b of the migration tool 18 and a reading module 18c of the migration tool 18. Also depicted are data repositories 22, which may be online 22a, or off-line 22b. In addition depicted are destination device API 24 and source device API 26. Furthermore, steps 30-36 are depicted.

In a first step 30, a connection between the destination device 2 and the source device 4 is established. When the start module 18a of migration tool 18 is started, it searches for established infrared or Bluetooth^{®} connections with the source device 4. If no connection between the source device 4 and the destination device 2 exists, the start module 18a establishes a new infrared or Bluetooth^{®} connection. In case of an infrared connection, the user activates the infrared port on the source device 4. The migration tool 18 will then communicate with the source device 4 when the infrared port has been activated. In case of a Bluetooth^{®} connection, the user first accepts the connection on the source device 4 before the migration tool 18 is able to communicate with the source device 4. This user interaction on the source device is implemented for security reasons.

After having established a connection in step 30, migration tool 18 detects the type of the source device 4. Therefore, in step 30, the start module 18a requests the source device 4 to return a type ID, for instance via an OBEX (Object Exchange) capability service. OBEX is a session protocol that is optimised for ad-hoc wireless links and can be used to exchange all kind of capability objects like files, pictures, calendar entries and business cards. The start module 18a requests a capability object from the source device 4, containing information about the manufacture, the module name, and the software and firmware version of source device 4. After having received the capability information of source device 4 within destination device 2, the start module 18 detects whether a corresponding data collector tool 20 is available within the destination device 4.

The migration tool 18 may include a set of different data collector tools 20 in its repository 22. This may be an off-line data collector repository 22b as well as an online data collector server 22a. To support as many source devices 4 as possible, without including all kinds of data collector tools 20 within the migration tool 18, it is proposed to download other data collector tools 20 stored on data collector server 22a. The download may be done using common communication protocols.

In case the migration tool 18 detects a type of source device 4 that is not covered within the off-line repository 22b, it may open an online connection to the data collector server 22a and download the correct data collector tool 20 or request the user to insert a disk or memory card containing a suitable data collection tool (not shown in Fig. 3).

The data collector tool 20 may be an executable binary file. This binary file is sent in step 32 via interface 16 to source device 4. After being transferred to the source device 4, the migration tool 20 is executed in the source device 4. It may also be possible that the data collector tool 20 is installed on the source device 4 before being started. The process of the automatic installation of the data collector tool 20 depends on the capabilities and security requirements of the source device 4.

After the data collector tool 20 has been transferred to source device 4 and started therein, it is controlled by a core module 18b of the migration tool 18 in step 34. As the data collector tool 20 is controlled by the core module 18b, it may be a slender piece of software. It may only need to know how to access and extract the data from the source device 4 and how to transfer the data to the destination device 2. The core module 18b requests the data collector tool 20 in step 34 to determine available data types within the source device 4. The data collector tool 20 provides the data types in step 36 using XML via interface 16 to the destination device 2.

On the destination device 2, the migration tool 18 displays available data types on a user interface to a user. A user may select the data types that should be loaded from the source device 4 to the destination device 2. After the user has selected the desired data type or data types via the destination device's 2 user interface, the migration tool 18 requests the data collector tool 20 to collect the respective data for these data types from the user database 8.

Data collector tool 20 uses the source device API 26 to access the user database 8 and to collect the requested data. After the requested data is collected, it is transferred from source device 4 to destination device 2, in particular from the data collector module 20 to a reading module 18c, using a standard format, such as XML. As a standard format is used, reading module 18c may use data from different data collector tools 20. This enables using source devices 4 independently from the migration tool 18. The same migration tool 18 may use any data collector tool 20 in any source device 4. On the other hand, one data collector tool 20 may be used by any migration tools 18 on any destination devices 2.

After the data has been sent to reading module 18c, it is translated into a format used by the destination device 2. This may be done by using an API 24 of destination device 2. The standard data format as provided by data collector tool 20 is thus formatted into an appropriate format that can be used on destination device 2. After being translated into the appropriate data format, the data may be stored in user database 12.

The inventive.method allows data migration from a source device 2 to a destination device 4 without user interaction. The inventive method may be applicable without a need to manually install software. The migration tool and the data collector tool can communicate with each other without user interaction.

A direct connection between the devices which are to exchange data is established, using wireless or wired communication protocols. An additional device in between the respective destination device 2 or source device 4, as is common within prior art systems, can be omitted. Data may thus be transferred faster and with less errors. The connection between the devices may be established automatically.

Furthermore, a user does not need to care about which type of source device 2 the data is to be loaded from. The correct data collector tool 20 may be chosen according to the identified source device 2 automatically. Data conversion without error is thus possible, as appropriate tools are selected automatically. It is possible to support different types of source devices, as the implementation effort for implementing data collector tools may be kept low. The main part of the application is independent of the data structure of the source device. The same data collector module can be used for different destination devices 2 and re-implementation may be restricted to the data structure dependent part.

### List of References:

- 2: destination device
- 4: source device
- 6: data converter
- 8: user database
- 10: migration tool
- 12: data
- 14: migration tool
- 16: interface
- 18: migration tool
- 20: data collector tool
- 22: data repository
- 24: destination device API
- 26: source device API
- 30: request device type
- 32: send binary file
- 34: control data collector
- 36: send data

## Claims

1. A method for transferring data from a source communication device to a destination communication device, comprising:
establishing a data connection between the source communication device and the destination communication device,
identifying the source communication device with migration means of the destination communication device after establishing the data connection between the source communication device and the destination communication device,
selecting an appropriate data collector program means depending on the identified source communication device,
transferring the selected data collector program means from the destination communication device to the source communication device and executing the data collector program means on said source communication device,
collecting data to be transferred from the source communication device to the destination communication device using the data collector program means, and
transferring the collected data from the source communication device to the destination communication device using the data collector program means.

2. The method of claim 1, wherein the migration means within the destination communication device migrates the transferred data into the destination communication device by translating the transferred data into a data format of the destination communication device.

3. The method of claim 2, wherein the migration means provides at least one data collector program means for a particular source communication device, and wherein after identifying the source communication device a compatibility between the source communication device and the at least one provided data collector program means is checked.

4. The method of claim 3, wherein in case none of the at least one provided data collector program means is compatible with the identified source communication device, a compatible data collector program means is loaded onto the destination communication device.

5. The method of claim 4, wherein a communication connection is established between the destination communication device and a server to download a compatible data collector program means for the identified source communication device from the server onto the destination communication device.

6. The method of claim 1, wherein the data connection is a wired or wireless connection.

7. The method of claim 1, wherein the collected data is transferred from the source communication device to the destination communication device using a standard data format.

8. The method of claim 7, wherein the data collector program means translates the collected data into the standard data format, wherein the data collector program means transfers the translated data to the destination communication device using the data connection, and wherein the transferred data is translated from the standard format into a destination communication device specific format using a migration means.

9. The method of claim 1, wherein the source communication device is identified by requesting a type identification and/or a capability object of the source communication device.

10. The method of claim 1, wherein the data collector program means is an executable file.

11. The method of claim 1, wherein the data collector program means enables access to data within the source communication device.

12. The method of claim 1, wherein the destination communication device controls the data collector program means.

13. The method of claim 12, wherein the migration means within the destination communication device controls the data collector program means.

14. The method of claim 1, wherein the data collector program means is executed on the source communication device according to security rules within the source communication device.

15. The method of claim 1, wherein the data collector program means collects available data types within the source destination communication device, wherein information on the available data types is transferred from the source communication device to the destination communication device, wherein from the available data types, data types can be selected by a user, and wherein only data of the selected data types is collected by the data collector program means.

16. The method of claim 15, wherein the available data types are presented to a user for user selection via a user interface of the destination communication device.

17. A system for transferring data from a source communication device to a destination communication device, comprising:
a destination communication device, and
a source communication device,
the destination communication device and the source communication device comprising communication means to establish a data connection,
the destination communication device comprises:
migration means arranged for identifying the source communication device after establishing the data connection between the destination communication device and the source communication device, and for selecting an appropriate data collector program means depending on the identified source communication device, and
wherein the communication means are arranged for transferring the selected data collector program means from the destination communication device to the source communication device, and
the source communication device comprising:
an operating environment to execute the selected data collector program means for collecting data to be transferred from the source communication device to the destination communication device and for transferring the collected data from the source communication device to the destination communication device.

18. A communication device for receiving data from a source communication device, comprising:
migration means arranged for identifying the source communication device after establishing a data connection between the destination communication device and the source communication device, and for selecting an appropriate data collector program means depending on the identified source communication device,
communication means to establish a data connection with the source communication device, and arranged for transferring the selected data collector program means from the destination communication device to the source communication device.

19. A computer program for transferring data from a source communication device to a destination communication device, operable to cause a processor to
establish a data connection between the source communication device and the destination communication device,
identify the source communication device with migration means of the destination communication device after establishing the data connection between the source communication device and the destination communication device,
select an appropriate data collector program means depending on the identified source communication device,
transfer the selected data collector program means from the destination communication device to the source communication device and execute the data collector program means on said source communication device,
collect data to be transferred from the source communication device to the destination communication device using the data collector program means, and
transfer the collected data from the source communication device to the destination communication device using the data collector program means.

## Patentansprüche

1. Verfahren zum Übertragen von Daten von einem Quellkommunikationsgerät zu einem Zielkommunikationsgerät, umfassend:
Etablieren einer Datenverbindung zwischen dem Quellkommunikationsgerät und dem Zielkommunikationsgerät,
Identifizieren des Quellkommunikationsgeräts mit Migrationsmitteln des Zielkommunikationsgerätes nach dem Etablieren der Datenverbindung zwischen dem Quellkommunikationsgerät und dem Zielkommunikationsgerät,
Wählen eines geeigneten Datensammelprogrammmittels abhängig von dem identifizierten Quellkommunikationsgerät,
Übertragen des gewählten Datensammelprogrammmittels vom Zielkommunikationsgerät zum Quellkommunikationsgerät und
Ausführen des Datensammelprogrammmittels auf dem Quellkommunikationsgerät,
Sammeln von Daten, die vom Quellkommunikationsgerät zum Zielkommunikationsgerät übertragen werden sollen, mit dem Datensammelprogrammmittels, und
Übertragen der gesammelten Daten vom Quellkommunikationsgerät zum Zielkommunikationsgerät mit dem Datensammelprogrammmittels.

2. Verfahren nach Anspruch 1, wobei das Migrationsmittel im Zielkommunikationsgerät die übertragenen Daten durch Übersetzen der übertragenen Daten in ein Datenformat des Zielkommunikationsgeräts zu dem Zielkommunikationsgerät migriert.

3. Verfahren nach Anspruch 2, wobei das Migrationsmittel wenigstens ein Datensammelprogrammmittel für ein bestimmtes Quellkommunikationsgerät bereitstellt und wobei nach dem Identifizieren des Quellkommunikationsgeräts eine Kompatibilität zwischen dem Quellkommunikationsgerät und dem wenigstens einen bereitgestellten Datensammelprogrammmittel geprüft wird.

4. Verfahren nach Anspruch 3, bei dem, falls keines des wenigstens einen bereitgestellten Datensammelprogrammmittels mit dem identifizierten Quellkommunikationsgerät kompatibel ist, ein kompatibles Datensammelprogrammmittel auf das Zielkommunikationsgerät geladen wird.

5. Verfahren nach Anspruch 4, wobei eine Kommunikationsverbindung zwischen dem Zielkommunikationsgerät und einem Server etabliert wird, um ein kompatibles Datensammelprogramm für das identifizierte Quellkommunikationsgerät vom Server auf das Zielkommunikationsgerät herunterzuladen.

6. Verfahren nach Anspruch 1, wobei die Datenverbindung eine verdrahtete oder eine drahtlose Verbindung ist.

7. Verfahren nach Anspruch 1, wobei die gesammelten Daten vom Quellkommunikationsgerät mit einem Standarddatenformat auf das Zielkommunikationsgerät übertragen werden.

8. Verfahren nach Anspruch 7, wobei das Datensammelprogrammmittel die gesammelten Daten in das Standarddatenformat übersetzt, wobei das
Datensammelprogrammmittel die übersetzten Daten über die Datenverbindung zum Zielkommunikationsgerät überträgt und wobei die übertragenen Daten mit einem Migrationsmittel vom Standardformat in ein für das Zielkommunikationsgerät spezifisches Format übersetzt werden.

9. Verfahren nach Anspruch 1, wobei das Quellkommunikationsgerät durch Anfordern einer Typenkennung und/oder eines Fähigkeitsobjekts des Quellkommunikationsgeräts identifiziert wird.

10. Verfahren nach Anspruch 1, wobei das Datensammelprogramm eine ausführbare Datei ist.

11. Verfahren nach Anspruch 1, wobei das Datensammelprogrammmittel den Zugriff auf Daten im Quellkommunikationsgeräts ermöglicht.

12. Verfahren nach Anspruch 1, wobei das Zielkommunikationsgerät das Datensammelprogrammmittel steuert.

13. Verfahren nach Anspruch 12, wobei das Migrationsmittel im Zielkommunikationsgerät das Datensammelprogrammmittel steuert.

14. Verfahren nach Anspruch 1, wobei das Datensammelprogramm auf dem Quellkommunikationsgerät gemäß Sicherheitsregeln im Quellkommunikationsgerät ausgeführt wird.

15. Verfahren nach Anspruch 1, wobei das Datensammelprogrammmittel verfügbare Datentypen im Quellkommunikationsgerät sammelt, wobei Informationen über die verfügbaren Datentypen vom Quellkommunikationsgerät zum Zielkommunikationsgerät übertragen werden, wobei aus den verfügbaren Datentypen von einem Benutzer Datentypen ausgewählt werden können, und wobei nur Daten der gewählten Datentypen von dem Datensammelprogrammmittel gesammelt werden.

16. Verfahren nach Anspruch 15, wobei die verfügbaren Datentypen einem Benutzer zur Benutzerwahl über eine Benutzeroberfläche des Zielkommunikationsgeräts präsentiert werden.

17. System zum Übertragen von Daten von einem Quellkommunikationsgerät zu einem Zielkommunikationsgerät, umfassend:
ein Zielkommunikationsgerät, und
ein Quellkommunikationsgerät,
wobei das Zielkommunikationsgerät und das Quellkommunikationsgerät Kommunikationsmittel zum Etablieren einer Datenverbindung umfassen,
wobei das Zielkommunikationsgerät umfasst:
Migrationsmittel eingerichtet zum Identifizieren des Quellkommunikationsgeräts nach dem Etablieren der Datenverbindung zwischen dem Zielkommunikationsgerät und
dem Quellkommunikationsgerät und zum Auswählen eines geeigneten Datensammelprogrammmittels abhängig von dem identifizierten Quellkommunikationsgerät, und
wobei die Kommunikationsmittel eingerichtet sind zum Übertragen des gewählten Datensammelprogrammmittels vom Zielkommunikationsgerät zum Quellkommunikationsgerät und wobei das Quellkommunikationsgerät umfasst:
eine Betriebsumgebung zum Ausführen des gewählten Datensammelprogrammmittels zum Sammeln von Daten, die vom Quellkommunikationsgerät zum Zielkommunikationsgerät übertragen werden sollen, und zum Übertragen der gesammelten Daten vom Quellkommunikationsgerät zum Zielkommunikationsgerät.

18. Kommunikationsgerät zum Empfangen von Daten von einem Quellkommunikationsgerät umfassend:
Migrationsmittel eingerichtet zum Identifizieren des Quellkommunikationsgeräts nach dem Etablieren einer Datenverbindung zwischen dem Zielkommunikationsgerät und
dem Quellkommunikationsgerät und zum Auswählen eines geeigneten Datensammelprogrammmittels abhängig von dem identifizierten Quellkommunikationsgerät,
Kommunikationsmittel eingerichtet zum Aufbauen einer Datenverbindung mit dem Quellkommunikationsgerät und
eingerichtet zum Übertragen des gewählten Datensammelprogrammmittels vom Zielkommunikationsgerät an das Quellkommunikationsgerät.

19. Computerprogramm zum Übertragen von Daten von einem Quellkommunikationsgerät zu einem Zielkommunikationsgerät, betreibbar so dass einen Prozessor ausführt:
Etablieren einer Datenverbindung zwischen dem Quellkommunikationsgerät und dem Zielkommunikationsgerät,
Identifizieren des Quellkommunikationsgeräts mit Migrationsmitteln des Zielkommunikationsgerätes nach dem Etablieren der Datenverbindung zwischen dem Quellkommunikationsgerät und dem Zielkommunikationsgerät,
Auswählen eines geeigneten Datensammelprogrammmittels abhängig von dem identifizierten Quellkommunikationsgerät, Übertragen des gewählten Datensammelprogrammmittels vom Zielkommunikationsgerät zum Quellkommunikationsgerät und
Ausführen des Datensammelprogrammmittels auf dem Quellkommunikationsgerät,
Sammeln von Daten, die vom Quellkommunikationsgerät auf das Zielkommunikationsgerät übertragen werden sollen, mit dem Datensammelprogrammmittel, und
Übertragen der gesammelten Daten vom
Quellkommunikationsgerät zum Zielkommunikationsgerät mit dem Datensammelprogrammmittel.

## Revendications

1. Procédé pour transférer des données d'un dispositif de communication de départ vers un dispositif de communication d'arrivée, comprenant les étapes consistant à :
établir une liaison de données entre le dispositif de communication de départ et le dispositif de communication d'arrivée,
identifier le dispositif de communication de départ avec des moyens de migration du dispositif de communication d'arrivée après établissement de la liaison de données entre le dispositif de communication de départ et le dispositif de communication d'arrivée,
choisir des moyens appropriés formant programme de collecte de données en fonction du dispositif de communication de départ identifié,
transférer les moyens choisis formant programme de collecte de données du dispositif de communication d'arrivée vers le dispositif de communication de départ et exécuter les moyens formant programme de collecte de données sur ledit dispositif de communication de départ,
collecter les données devant être transférées du dispositif de communication de départ vers le dispositif de communication d'arrivée en utilisant les moyens formant programme de collecte de données, et
transférer les données collectées du dispositif de communication de départ vers le dispositif de communication d'arrivée en utilisant les moyens formant programme de collecte de données.

2. Procédé selon la revendication 1, dans lequel les moyens de migration situés dans le dispositif de communication d'arrivée font migrer les données transférées vers le dispositif de communication d'arrivée en traduisant les données transférées vers un format de données du dispositif de communication d'arrivée.

3. Procédé selon la revendication 2, dans lequel les moyens de migration fournissent au moins des moyens formant programme de collecte de données pour un dispositif particulier de communication de départ et dans lequel, après identification du dispositif de communication de départ, la compatibilité entre le dispositif de communication de départ et les au moins moyens fournis formant programme de collecte de données est vérifiée.

4. Procédé selon la revendication 3, dans lequel si aucun des au moins moyens fournis formant programme de collecte de données n'est compatible avec le dispositif de communication de départ identifié, des moyens compatibles formant programme de collecte de données sont chargés dans le dispositif de communication d'arrivée.

5. Procédé selon la revendication 4, dans lequel une liaison de communication est établie entre le dispositif de communication d'arrivée et un serveur afin de télécharger des moyens compatibles formant programme de collecte de données pour le dispositif de communication de départ identifié du serveur vers le dispositif de communication d'arrivée.

6. Procédé selon la revendication 1, dans lequel la liaison de données est une liaison filaire ou sans fil.

7. Procédé selon la revendication 1, dans lequel les données collectées sont transférées du dispositif de communication de départ vers le dispositif de communication d'arrivée sous un format de données standard.

8. Procédé selon la revendication 7, dans lequel les moyens formant programme de collecte de données traduisent les données collectées vers le format de données standard, dans lequel les moyens formant programme de collecte de données transfèrent les données traduites vers le dispositif de communication d'arrivée en utilisant la liaison de données, et dans lequel les données transférées sont traduites du format standard vers un format propre au dispositif de communication d'arrivée grâce à des moyens de migration.

9. Procédé selon la revendication 1, dans lequel le dispositif de communication de départ est identifié par demande d'identification de type et/ou d'objet de capacité du dispositif de communication de départ.

10. Procédé selon la revendication 1, dans lequel les moyens formant programme de collecte de données sont un fichier exécutable.

11. Procédé selon la revendication 1, dans lequel les moyens formant programme de collecte de données permettent d'accéder aux données contenues dans le dispositif de communication de départ.

12. Procédé selon la revendication 1, dans lequel le dispositif de communication d'arrivée contrôle les moyens formant programme de collecte de données.

13. Procédé selon la revendication 12, dans lequel les moyens de migration situés dans le dispositif de communication d'arrivée contrôlent les moyens formant programme de collecte de données.

14. Procédé selon la revendication 1, dans lequel les moyens formant programme de collecte de données sont exécutés sur le dispositif de communication de départ selon des règles de sécurité contenues dans le dispositif de communication de départ.

15. Procédé selon la revendication 1, dans lequel les moyens formant programme de collecte de données collectent les types de données disponibles dans le dispositif de communication de départ, dans lequel des informations sur les types de données disponibles sont transférées du dispositif de communication de départ vers le dispositif de communication d'arrivée, dans lequel parmi les types de données disponibles, des types de données peuvent être choisis par un utilisateur, et dans lequel seules les données des types de données choisis sont collectées par les moyens formant programme de collecte de données.

16. Procédé selon la revendication 15, dans lequel les types de données disponibles sont présentés à un utilisateur pour être choisis par l'utilisateur au travers d'une interface utilisateur du dispositif de communication d'arrivée.

17. Système pour transférer des données d'un dispositif de communication de départ vers un dispositif de communication d'arrivée, comprenant :
un dispositif de communication d'arrivée et
un dispositif de communication de départ,
le dispositif de communication d'arrivée et le dispositif de communication de départ comprenant des moyens de communication permettant d'établir une liaison de données,
le dispositif de communication d'arrivée comprenant :
des moyens de migration conçus pour identifier le dispositif de communication de départ après établissement de la liaison de données entre le dispositif de communication d'arrivée et le dispositif de communication de départ et pour choisir des moyens appropriés formant programme de collecte de données en fonction du dispositif de communication de départ identifié, et
dans lequel les moyens de communication sont conçus pour transférer les moyens choisis formant programme de collecte de données du dispositif de communication d'arrivée vers le dispositif de communication de départ, et
le dispositif de communication de départ comprenant :
un environnement d'exploitation destiné à exécuter les moyens choisis formant programme de collecte de données pour collecter des données devant être transférées du dispositif de communication de départ vers le dispositif de communication d'arrivée et pour transférer les données collectées du dispositif de communication de départ vers le dispositif de communication d'arrivée.

18. Dispositif de communication destiné à recevoir des données provenant d'un dispositif de communication de départ et comprenant :
des moyens de migration conçus pour identifier le dispositif de communication de départ après établissement d'une liaison de données entre le dispositif de communication d'arrivée et le dispositif de communication de départ, et pour choisir des moyens appropriés formant programme de collecte de données en fonction du dispositif de communication de départ identifié,
des moyens de communication destinés à établir une liaison de données avec le dispositif de communication de départ et conçus pour transférer les moyens choisis formant programme de collecte de données du dispositif de communication d'arrivée vers le dispositif de communication de départ.

19. Programme informatique destiné à transférer des données d'un dispositif de communication de départ vers un dispositif de communication d'arrivée et utilisable pour faire exécuter par un processeur les étapes consistant à :
établir une liaison de données entre le dispositif de communication de départ et le dispositif de communication d'arrivée,
identifier le dispositif de communication de départ avec des moyens de migration du dispositif de communication d'arrivée après établissement de la liaison de données entre le dispositif de communication de départ et le dispositif de communication d'arrivée,
choisir des moyens appropriés formant programme de collecte de données en fonction du dispositif de communication de départ identifié,
transférer les moyens choisis formant programme de collecte de données du dispositif de communication d'arrivée vers le dispositif de communication de départ et exécuter les moyens formant programme de collecte de données sur ledit dispositif de communication de départ,
collecter les données devant être transférées du dispositif de communication de départ vers le dispositif de communication d'arrivée en utilisant les moyens formant programme de collecte de données, et
transférer les données collectées du dispositif de communication de départ vers le dispositif de communication d'arrivée en utilisant les moyens formant programme de collecte de données.
